## Europäisches Patentamt
## European Patent Office
## Office européen des brevets

(19)

(11) Veröffentlichungsnummer: **0 177 788**
**B1**

(12)     **EUROPÄISCHE PATENTSCHRIFT**

(45) Veröffentlichungstag der Patentschrift: **22.11.90**

(51) Int. Cl.⁵: **B 60 C 23/00**

(21) Anmeldenummer: **85111465.2**

(22) Anmeldetag: **11.09.85**

(54) Druckmessvorrichtung zur kontinuierlichen Überwachung des Luftdruckes in Fahrzeugreifen.

(30) Priorität: **05.10.84 DE 3436493**

(43) Veröffentlichungstag der Anmeldung:
**16.04.86 Patentblatt 86/16**

(45) Bekanntmachung des Hinweises auf die
Patenterteilung:
**22.11.90 Patentblatt 90/47**

(84) Benannte Vertragsstaaten:
**AT BE CH DE FR GB IT LI NL SE**

(56) Entgegenhaltungen:
WO-A-82/02249
DE-A-2 936 213
DE-A-3 242 291
DE-A-3 341 353
DE-C- 635 825
DE-C- 836 602

INSTRUMENTS & CONTROL SYSTEMS, Band
49, Nr. 10, Oktober 1976, Seiten 39-46; J.
SANDFORD: "Accurate pressure transducers
keep productivity high"

(73) Patentinhaber: Coesfeld, Dieter
Habichtswalder Strasse 15
D-3502 Vellmar 3/Kassel (DE)

(72) Erfinder: Coesfeld, Dieter
Habichtswalder Strasse 15
D-3502 Vellmar 3/Kassel (DE)
Erfinder: Hugemann, Bernhard
Heinrich-Seliger-Strasse 49
D-6000 Frankfurt/Main 71 (DE)
Erfinder: Scondo, Ludwig
Luxemburger Allee 16
D-6000 Frankfurt/Main 60 (DE)
Erfinder: Schuster, Wilhelm
Georg-Speyer-Strasse 64
D-6000 Frankfurt/Main 90 (DE)
Erfinder: Schwabe, Hans-Dieter
Parkstrasse 16
D-3513 Staufenberg 1 Benterode (DE)
Erfinder: Stahl, Jürgen
Juchostrasse 3
D-6000 Frankfurt/Main 60 (DE)
Erfinder: Stösser, Klaus
Amselweg 14
D-6238 Hofheim-Langenhain (DE)

(74) Vertreter: Patentanwälte Zellentin & Partner
Rubensstrasse 30
D-6700 Ludwigshafen (DE)

EP 0 177 788 B1

## Beschreibung

Die Erfindung betrifft eine Druckmessvorrichtung zur kontinuierlichen Überwachung des Luftdruckes in Fahrzeugreifen, bei der eine Membran und ein mit dieser bewegbarer Magnet in einer aus einem Unterteil mit dichtend darauf befestigbarem Deckel bestehenden Druckmessdose eingesetzt ist, die auf Änderungen im Reifendruck anspricht und diese auf ein Terminal übeträgt.

Reifenüberwachungsgeräte, bei denen ein Magnet über Membranen oder Druckmessdosen in Abhängigkeit vom herrschenden Reifendruck bewegt oder das Magnetfeld in anderer Weise verändert wird, sind in zahlreichen Ausführungsformen vorgeschlagen worden.

Aus der DE—A—25 56 047 ist ein Warnsystem für niedrigen Reifendruck mit einer Druckmessvorrichtung der im Oberbegriff des Anspruchs 1 definierten Art bekannt, bei dem ein Magnet mit ersten und zweiten Polflächen vorgesehen ist, um bei Normallage des Magneten einen geschlossenen Magnetfluss zu bilden. Die Vorrichtung weist einen Niederdruckluftschalter in einem mit mehreren Ventilen versehenen Kammersystem und einen den Bezugsdruck liefernden Luftbalgen auf. Der Niederdruckluftschalter ist an der Felge des Fahrzeugreifen befestigt und erstreckt sich in den Reifen. Bei Absinken des Reifendruckes wird ein durch einen O-Ring gedichteter Kolben betätigt, der die Balgenbewegung freigibt. Dabei wird der Magnet aus der Normallage in eine ausgefahrene Lage gebracht. Das dadurch erzeugte äussere Magnetfeld wird durch eine stationäre Abtasteinrichtung abgefühlt, um ein Signal zu erzeugen.

In der DE—A—28 48 942 ist ein ähnliches Überwachungssystem mit magnetischer Signalgebung beschrieben, die im Inneren der Felge und damit im Luftraum des Fahrzeugreifen montiert wird. Das Gerät muss daher vor Aufziehen des Reifens montiert und durch Beschicken mit Heliumgas justiert werden. Auch dieses Überwachungssystem besteht aus zahlreichen Bauteilen, wie einem dehnbaren Balg und dieser zugeordneten Magneteinheit mit Dauermagneten und Polstück, einer Platte aus ferromagnetischem Werkstoff. Besonders nachteilig ist die Tatsache, dass das Gerät nach der Reifenmontage nicht mehr zugänglich ist. Hinzu kommt, dass der Magnet in radialer Richtung zum Fahrzeugrad bewegt wird.

Aus der DE—A—30 29 246 ist ein Reifendruckmesser mit magnetischer Übertragungseinrichtung für den Messwert von Fahrzeugreifen bekannt. Dieser Druckmesser besteht aus einer Druckmessdose mit einer gewellten Edelstahlmembran, auf welche über eine Bohrung in der Felge der herrschende Reifendruck wirkt. Die Wellmembran trägt einen Magneten, der in Abhängigkeit vom Reifendruck radial zum Rad bewegt wird. Darüberhinaus ist ein Referenzmagnet vorgesehen, der mit der Raddrehung umläuft, aber keine Radialbewegung ausführt. Beide Magneten werden bei jeder Radumdrehung an einer Induktionsspule vorbeigeführt und die induzierten Spannungen elektrisch so aufgearbeitet, dass die verglichen werden können. Auftretende Spannungsdifferenzen weisen auf Druckabfall in überwachten Reifen hin.

Alle bisher bekannt gewordenen Druckmeßsysteme zur kontinuierlichen Überwachung des Luftdruckes in Fahrzeugreifen sind äusserst kompliziert aufgebaut und bestehen aus einer Vielzahl von Einzelteilen. Darüberhinaus muss bei den meisten Systemen die Felge des Fahrzeugrades mit einer Bohrung versehen werden, was aus betriebstechnischen Gründen unerwünscht ist und daher zum Erlöschen der Fahrerlaubnis führen kann. An die Dichtigkeit der Gebergehäuse werden zudem hohe Anforderung gestellt, da geringste Druckabfälle in der Referenzkammer zu Fehlanzeigen führen. Die meisten Geber sind mit Federn und entsprechenden Einstellschrauben ausgestattet, wodurch die Temperaturempfindlichkeit solcher Überwachungsgeräte sehr gross wird. Dies macht zusätzliche Bauelemente zur Kompensation von Temperaturschwankungen erforderlich. Die vorgeschlagenen Überwachungssysteme werden mit Gebern beschrieben, die an der Felge so montiert sind, dass die Bewegung der den Magneten tragenden Elemente radial zum Fahrzeugrad erfolgt. Dadurch kommen zumindest teilweise sehr grosse Fliekräfte zur Auswirkung, die vom Felgendurchmesser und von der gefahrenen Geschwindigkeit abhängig sind und daher stark schwanken.

Aufgabe der Erfindung ist es, eine Druckmessvorrichtung der eingangs genannten Art zu schaffen, die aus wenigen Einzelteilen in einfacher kompakter Bauweise herstellbar und leicht am Felgenhorn eines Fahrzeugreifen montierbar ist, dabei problemlos an unterschiedliche Einsatzbereiche mit anderen Druckverhältnissen angepasst werden kann und sicher funktioniert.

Diese Aufgabe wird durch eine Druckmessvorrichtung der eingangs genannten Art dadurch gelöst, dass die Membran aus einem von einem kreisförmigen Umfangsrand flachkonisch nach innen verlaufenden Membranteil besteht, das eine mittige Öffnung aufweist und an dieser zylindrisch nach aussen gezogen und der Boden dieses zylindrischen Ansatzes verschlossen ist, die Membran den Innenraum der Druckmessdose überspannend eingesetzt ist und mit ihrem Umfangsrand auf einer nach innen gerichteten Schulter am freien Rand des Unterteils der Druckmessdose aufsitzt und hier durch den auf das Unterteil aufgeschraubten Deckel dichtend festgehalten ist, in dem zylindrischen Ansatz der Membran ein Dauermagnet eingesetzt ist und der Deckel einen mit einem Ventil eines Fahrzeugreifens verbindbaren Anschlußstutzen aufweist, und dass der Druckmessdose ein mit einem Terminal zusammenwirkender magnetoresistiver Sensor zugeordnet ist.

Zweckmässige Weiterbildungen der Druckmessvorrichtung sind in den Unteransprüchen gekennzeichnet.

Die erfindungsgemässe Druckmessdose mit linearer Kennlinie und dem Einsatz eines linearen magnet-empfindlichen Sensors nach dem magnetoresistiven Effekt, ermöglicht eine einfache Schaltungsanordnung, die berührungslos über einen relativ grossen Abstand von mehr als 2 cm eine Zustandsanzeige des Fahrzeugreifens vermittelt. Die Druckmessdose kann in sehr kleinen Abmessungen und mit geringem Gewicht gebaut werden. Die lineare Wegänderung der Membran ist abhängig vom Reifendruck. Sie besteht aus einem Material, das ausreichend empfindlich ist, um auf Änderungen in Bezug auf einen Nenn- oder Solldruck anzusprechen. Die Druckmessdose kann problemlos an unterschiedliche Einsatzbereiche mit anderen Druckverhältnissenangepasst werden. Durch die Membran wird die Druckmessdose in zwei Kammern geteilt. Bei der Montage wird zunächst die eine Kammer mit dem gewünschten Solldruck beaufschlagt, danach am Felgenhorn eines Fahrzeugreifens montiert und an ein Ventil des Reifens angeschlossen und dabei das Druckgleichgewicht in den Kammern hergestellt. Die Montage dieser handlichen Druckmessdose am Felgenhorn ist äusserst einfach und der Vorteil ist ferner, dass dieses kleine Gerät jederzeit von aussen zugänglich ist. Es wird ein Dauermagnet mit hoher Temperaturstabilität, grosser Koerzitivfeldstärke verwendet, bei dem keine Entmagnetisierung auftritt. Die wenigen auf die Erfordernisse leicht abstimmbaren Bauteile ergeben eine sicher arbeitende Überwachungsvorrichtung, die problemlos an Fahrzeugreifen montiert werden kann. Dies gilt naturgemäss auch für den Sensor, der mit der Druckmessdose zusammenwirkt, um das gewünschte Signal zu geben, das eine Ändergung im Reifendruck anzeigt.

Die Erfindung wird anhand eines in den Zeichnungen dargestellten Ausführungsbeispiels näher erläutert. Es zeigen:

Fig. 1 eine Längsschnittansicht einer im Gleichgewicht befindlichen oder druckloser Druckmessdose;

Fig. 2 eine Längsschnittansicht einer Druckmessdose mit druckbeaufschlagter dem Anschlußstutzen abgekehrter Kammer; und

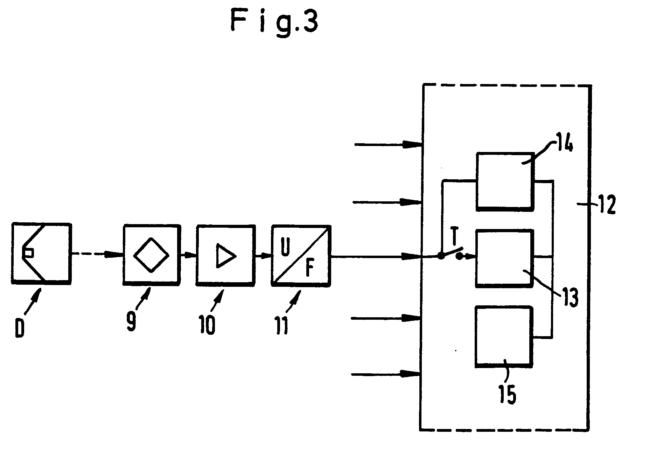

Fig. 3 eine schmatische Ansicht von der Druckmessdose nachgeschalteter Fühler- und Anzeigeeinrichtungen.

Die allgemein mit D bezeichnete Druckmessdose besteht aus einem zylindrischen Unterteil 1 und einem auf dieses dicht aufsetzbaren Deckel 2 mit Anschlußstutzen 3 zum Anschliessen an ein Ventil eines Fahrzeugreifen (nicht dargestellt).

In das Unterteil 1 ist eine Membran 4 aus einem federnd nachgiebigen Material eingesetzt, beispielsweise einem Elastomer, das langzeitmässig einen Druckausgleich zwischen zwei Kammern der Druckmessdose D gestattet. Die Membran 4 besteht aus einem zylindrischen Ansatz $4_1$ mit geschlossenem Boden $4_2$. Von dem dem Boden $4_2$ gegenüberliegenden, eine Öffnung 6 begrenzenden Rand des Ansatzes $4_1$ geht ein flachkonisch nach aussen und oben gerichtetes Membranteil $4_3$ aus, dessen Umfangsrand $4_4$ auf

einer Schulter $5_2$ des Unterteils 1 der Druckmessdose D sitzt. Diese Schulter $5_2$ ist am freien dem Deckel 2 zugekehrten Rand des Unterteils 1 radial nach innen gerichtet. Die Membran 4 überspannt den Innenraum der Druckmessdose und ist linear bewegbar. Zweckmässig ist im Untertail 1 der Druckmessdose D ein der Form der Membran 4 angepasster Sitz vorgesehen. Dieser wird gebildet durch eine zylindrische Aussparung 5, zur Aufnahme des zylindrischen Membranansatzes $4_1$. Vom freien Rand der Begrenzung dieser Aussparung 5 verläuft flachkonisch nach oben zur Schulter $5_2$ der Druckmessdose D eine Sitzfläche $5_1$ für die Membran 4. Der zylindrische Ansatz $4_1$ der Membran 4 ist lose in die zylindrische Aussparung 5 im Unterteil der Druckmessdose D eingesetzt und das flachkonische Membranteil $4_3$ ist auf die Sitzfläche $5_1$ lose aufgelegt.

In den zylindrischen Ansatz $4_2$ der Membran 4 ist ein Dauermagnet 7 eingesetzt und wird hier zweckmässig durch einen am Öffnungsrand des zylindrischen Ansatzes $4_1$ der Membran 4 angeformten, radial nach innen gerichteten, die Öffnung 6 verengenden Kranz $4_5$ in Lage gehalten.

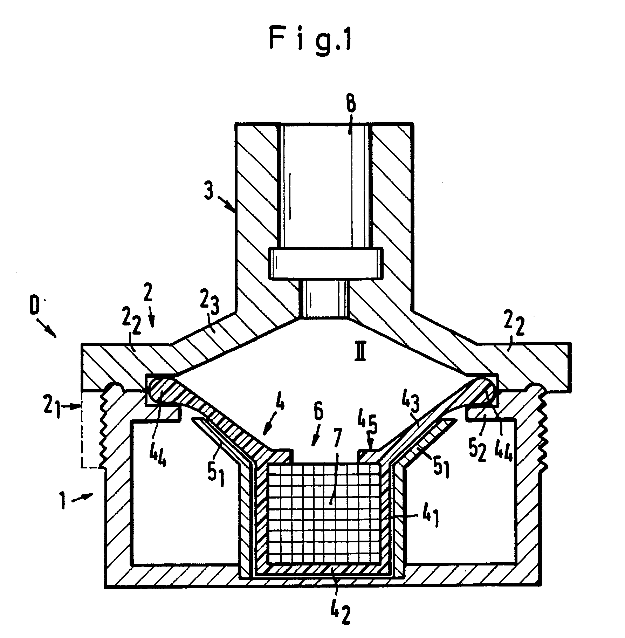

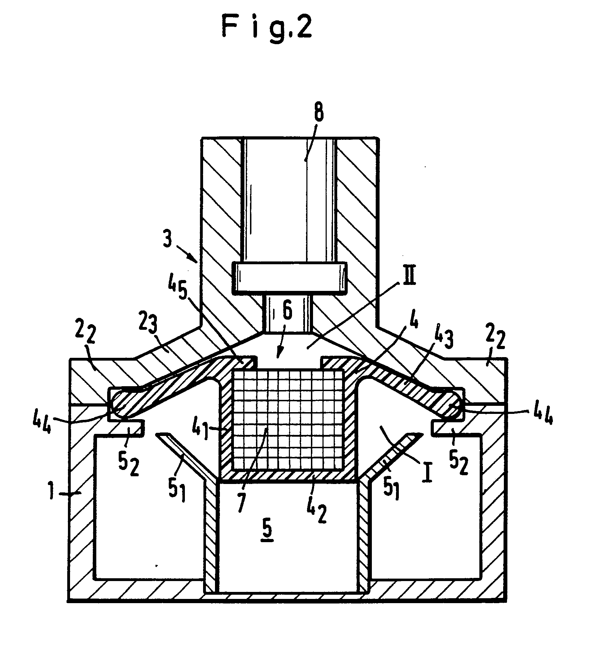

Der Deckel 2 der Druckmessdose D wird dichtend mit dem Unterteil 1 verbunden, und zwar kann dieser Verbund lösbar, beispielsweise durch Verschrauben, oder fest, beispielsweise durch Verschweissen, geschehen. Bei der dargestellten Ausführungsform in Fig. 1 sind Vorkehrungen zum lösbaren Verschrauben vorgesehen. Bei der Ausführungsform in Fig. 2 ist der Deckel 2 mit dem Unterteil 1 fest, also unlösbar verbunden. Der Deckel 2 der Druckmessdose D umgreift mit einem zylindrischen Ring $2_1$ den oberen Randbereich des Unterteils 1. Dieser zylindrische Ring $2_1$ weist ein Innengewinde auf, das auf eine entsprechendes Aussengewinde am Unterteil 1 aufgeschraubt wird. Die Deckelplatte besteht aus einem vom Umfangsrand des zylindrischen Ringes $2_1$ nach innen gerichteten Flachring $2_2$, der mit seiner Unterseite auf der Oberseite der Schulter $5_2$ des Unterteils 1 und auf dem Umfangsrand $4_4$ der Membran 4 aufliegt. Auf diese Weise wird der vorzugsweise als Dichtlippe ausgebildete Umfangsrand $4_4$ der Membran 4 zwischen der Schulter $5_2$ des Unterteils 1 und dem Flachring $2_2$ des Deckels 2 dichtend gehalten. Vom Rand der Innenöffnung des Flachrings $2_2$ geht ein flachkonisch nach oben gezogenes Deckelteil $2_3$ aus, das mit einer mittigen Öffnung versehen ist, die in den Durchlass 8 des Anschlußstutzens 3 mündet.

Die Membran 4 teilt den Innenraum der Druckmessdose D in zwei getrennte Kammern, und zwar in die Kammer I im Unterteil 1 und die Kammer II in Deckel 2. Die Kammer I ist in sich geschlossen, während die Kammer II über den Durchlass 8 mit dem Ventil des Fahrzeugreifens verbunden werden kann, so dass sich in dieser Kammer II der im Fahrzeugreifen vorhandene Druck einstellt.

Der Druckmessdose D ist eine die Druckverhältnisse anzeigende elektrische Einrichtung zugeordnet, die in einem gewissen Abstand, der grösser als 2 cm sein kann, parallel zu Umlaufbahn der am Felgenhorn befestigten Druckmessdose D stationär angeordnet ist. Diese Einrichtung besteht aus einem Sensor 9, der vorzugsweise über einen Verstärker 10 und einem Spannungs-Frequenz-Wandler 11 mit einem Terminal 12 verbunden ist. Dieses Terminal 12 ist mit entsprechenden Einrichtungen ausgerüstet, die der Bedienungsperson ermöglichen, jeweilige Zustände der Druckverhältnisse im Fahrzeugreifen festzustellen. So kann ein Speicher 13 durch Betätigen einer Drucktaste T eingeschaltet werden. Ein Vergleicher 14 ist unmittelbar an den Spannungs-Frequenz-Wandler 11 der Anzeigeeinrichtung angeschlossen, während diesem Vergleicher 14 eine Alarmeinrichtung 15 nachgeschaltet ist.

Die Funktion der Überwachungs- bzw. Druckmesseinrichtung ist folgende:

Die Kammer I der Druckmessdose D wird bei der Fertigung mit midestens dem geforderten Solldruck beaufschlagt. Da der Druck dabei in Kammer I ansteigt, weicht die nachgiebige Membran 4 aus und wird von ihrem Sitz abgehoben, aber an ihrem Umfangsrand $4_4$ festgehalten. Danach wird die Druckmessdose D über den Anschlußstutzen 3 über ein Reifenventil (nicht dargestellt) mit dem Druckraum des Fahrzeugreifens verbunden, wobei die nachgiebige Membran 4 zunächst eine Zwischenstellung einnimmt, da der Druck in Kammer II der Druckmessdose D ansteigt. Wenn der Solldruck des angeschlossenen Fahrzeugreifens um einen bestimmten Wert absinkt, bewegt sich die Membran 4 linear zum Druck in eine Endstellung. Da die Membran 4 langzeitmässig einen Druckausgleich zwischen den beiden Kammern I und II zulässt, wird in der mit dem Referenzdruck beaufschlagten Kammer I immer der entsprechende Druck herrschen. Kurzfristige Druckänderungen in Kammer II werden kaum einen Druckausgleich zur Folge haben. Tritt jedoch im Fahrzeugreifen ein grösserer Druckabfall auf, wird die Membran 4 und der in dieser integrierte Magnet 7 in die Kammer II, also weiter von dem feststehenden, magnetoresistiven Sensor 9 weg bewegt. Dieser spricht auf die vom Weg des Magneten 7 abhängige linear Magnetfeldänderung an und ein durch die Verstärkerschaltung verstärktes Signal wird im Terminal 12 gespeichert, wo die Auswertung erfolgt.

Bei Druckausgleich in Kammer I und Kammer II der Druckmessdose D wird das gesendete Signal im Speicher 13 gespeichert. Dieser Bezugswert wird dann mit durch Druckänderungen im Fahrzeugreifen auftretenden Werten verglichen. Die Schaltung der Anzeigeeinrichtung kann in verschiedenen Weisen ausgelegt werden. So kann die bei Druckabfall sich in Kammer II ändernde elektrische Grösse kontinuierlich zur Anzeige gebracht werden, um bei Erreichen einer maximal zulässigen Abweichung einen Alarm auszulösen.

Das elektrische Signal wird bei jedem Vorbeilauf des in der Druckmessdose D eingesetzten Magneten 7 vom magnetoresistiven Sensor 9 registriert und an das Terminal 12 weitergegeben.

Die Signalgrösse ist unabhängig von der Frequenz, also von der Drehzahl/Zeit des Fahrzeugreifens. Bei Stillstand des Reifens erfolgt naturgemäss weder eine Messwertermittlung noch eine Messwertverarbeitung.

Durch einen dem Verstärker 10 nachgeschalteten Spannungs-Frequenz-Wandler 11 wird unabhängig von der Länge der Leitungen oder der Anzahl der zwischengeschalteten Steckkontaktverbindungen eine störungsfreie Übertragung des elektrischen Signals zum Terminal 12 sichergestellt. Zur Vermeidung des Einflusses von beispielsweise elektromagnetischen Störungen aus dem Umfeld werden die sich einstellenden Frequenzen mehrfach abgefragt, miteinander verglichen und erst bei Übereinstimmung mehrerer Messwerte im Terminal gespeichert, ausgezählt, mit dem Bezugswert verglichen und zur Anzeige gebracht.

Bei einer Vielzahl von zu überwachenden Reifen wird im Terminal zweckmässig ein Mikroprozessor eingesetzt.

Eine ausreichende und sichere Überwachung wird gewährleistet wenn das Terminal für folgende Funktionen eingerichtet ist:

Abfragen der einzelnen Meßstellen und deren Speicherung mit Zuordnung beim Eichvorgang;

Abfragen der einzelnen Meßstellen in einem regelmässig wiederkehrenden Zyklus, Vergleich der Messwerte mit den Speicherwerten;

Anzeige bei Unter- bzw. Überschreiten des Druckes in einem der Fahrzeugreifen unter bzw. über einen voreingestellten Wert in einem Achsenbildschema mit Alarmsignal.

Die einfach zu montierende, aus wenigen Bauteilen bestehende äusserst kleine Druckmessdose und der dieser zugeordnete Anzeigekreis arbeiten einwandfrei und lassen Druckänderungen im Fahrzeugreifen frühzeitig erkennen und damit grossen Schaden verhüten.

Liste der Bezugszeichen

| | |
|---|---|
| D | Druckmessdose |
| 1 | zylindrisches Unterteil |
| 2 | Deckel |
| $2_1$ | zylindrischer Ring |
| $2_2$ | Flachring |
| $2_3$ | flachkonisches Deckelteil |
| 3 | Anschlußstutzen |
| 4 | Membran |
| $4_1$ | zylindrischer Membranansatz |
| $4_2$ | Boden |
| $4_3$ | flachkonisches Membranteil |
| $4_4$ | Umfangsrand, Dichtlippe |
| $4_5$ | Kranz |
| 5 | Aussparung |
| $5_1$ | Sitzfläche |
| $5_2$ | Schulter |
| 6 | Öffnung |
| 7 | Dauermagnet |
| 8 | Durchlass |
| 9 | Sensor |
| 10 | Verstärker |
| 11 | Spannungs-Frequenz-Wandler |
| 12 | Terminal |

13 Speicher
14 Vergleicher
15 Alarmeinrichtung
I Kammer
II Kammer
T Drucktaste

**Patentansprüche**

1. Druckmessvorrichtung zur kontinuierlichen Überwachung des Luft-druckes in Fahrzeugreifen, bei der eine Membran und ein mit dieser bewegbarer Magnet in einer aus einem Unterteil mit dichtend darauf befestigbarem Deckel bestehenden Druckmessdose eingesetzt ist, die auf Änderungen im Reifendruck anspricht und diese auf ein Terminal überträgt, dadurch gekennzeichnet, dass die Membran (4) aus einem von einem kreisförmigen Umfangrand ($4_4$) flachkonisch nach innen verlaufenden Membranteil ($4_3$) besteht, das eine mittige Öffnung (6) aufweist und an dieser zylindrisch nach aussen gezogen und der Boden ($4_2$) des zylindrischen Ansatzes ($4_1$) verschlossen ist, die Membran (4) den Innenraum der Druckmessdose (D) überspannend eingesetzt ist und mit ihrem Umfangsrand ($4_4$) auf einer radial nach innen gerichteten Schulter ($5_2$) am freien Rand des Unterteils (1) der Druckmessdose (D) aufsitzt und hier durch den auf das Unterteil (1) aufgesetzten Deckel (2) dichtend fest gehalten ist, in dem zylindrischen Ansatz ($4_1$) der Membran (4) ein Dauermagnet (7) eingesetzt ist und der Deckel (2) einen mit einem Ventil eines Fahrzeugreifens verbindbaren Anschlußstutzen (3) aufweist, und dass der Druckmessdose (D) ein mit einem Terminal (12) zusammenwirkender magnetoresistiver Sensor (9) zugeordnet ist.

2. Druckmessvorrichtung nach Anspruch 1, dadurch gekennzeichnet, dass der Umfangsrand ($4_4$) der Membran (4) als wulstartige Dichtlippe ausgebildet ist.

3. Druckmessvorrichtung nach Anspruch 1, dadurch gekennzeichnet, dass im Unterteil (1) der Druckmessdose (D) ein der Form der Membran (4) im wesentlichen angepasster Sitz vogesehen ist, auf dem die Membran (4) lose aufliegt.

4. Druckmessvorrichtung nach Anspruch 1 und 3, dadurch gekennzeichnet, dass als Sitz für die Membran (4) im Unterteil (1) der Druckmessdose (D) eine zylindrische Aussparung (5) zur Aufnahme des zylindrischen Ansatzes ($4_2$) vorgesehen ist, und vom freien Rand der Aussparung (5) eine flachkonisch nach oben zur Schulter ($5_2$) des Unterteils (1) verlaufende Sitzfläche ($5_1$) führt, auf der das flachkonische Membranteil ($4_1$) lose aufliegt.

5. Druckmessvorrichtung nach Anspruch 1, dadurch gekennzeichnet, dass der Randbereich des Deckels (2) als Flachring ($2_2$) ausgebildet ist, der auf der Schulter ($5_2$) des Unterteils (1) und auf dem die Dichtlippe bildenden Umfangsrand ($4_4$) der Membran (4) aufsitzt, und vom Innenrand des Flachrings ($2_2$) ein flachkonisch nach oben gezogenes Deckelteil ($2_3$) ausgeht, das eine mittige Öffnung aufweist, die in einem Durchlass (8) des Anschlußstutzens (3) mündet.

6. Druckmessvorrichtung nach Anspruch 1 und 5, dadurch gekennzeichnet, dass der Deckel (2) einen das Unterteil (1) der Druckmessdose (D) umgreifenden mit Innengewinde versehenen zylindrischen Ring ($2_1$) aufweist und der Flachring ($2_2$) von dem dem freien Rand gegenüberliegenden Umfangsrand des zylindrischen Ringes ($2_1$) im rechten Winkel radial nach innen gerichtet ist.

7. Druckmessvorrichtung nach Anspruch 1, dadurch gekennzeichnet, dass dem magnetoresistiven Sensor (9) ein Verstärker (10) sowie ein Spannungs-Frequenz-Wandler (11) zugeordnet sind.

**Revendications**

1. Dispositif de mesure de pression destiné à la surveillance continue de la pression d'air dans des pneus de véhicule automobile, dans lequel sont montés une membrane et un aimant mobile avec cette dernière dans un dynamomètre constitué d'une pièce inférieure et d'un couvercle fixé de façon étanche sur celle-ci, qui réagit à des modifications de pression de pneumatique et transfèrent celles-ci à un terminal, caractérisé en ce que la membrane (4) se compose d'une pièce de membrane ($4_3$), qui s'étend vers l'intérieur en un cône plat à partir d'un bord périphérique circulaire ($4_4$), présente un orifice central (6), est étirée cylindriquement vers l'extérieur à cet orifice, et est fermée au fond ($4_2$) de l'appendice cylindrique ($4_1$), la membrane (4) est montée en recouvrant l'espace intérieur du dynamomètre (D) et repose par son bord périphérique ($4_4$) sur un épaulement ($5_2$) tourné radialement vers l'intérieur sur le bord libre de la partie inférieure (1) du dynamomètre (D) et fixée de façon étanche à cet emplacement par le couvercle (2) placé sur la partie inférieure (1), un aimant permanent (7) est monté dans l'appendice cylindrique ($4_1$) de la membrane (4) et le couvercle (2) présente une tubulure de raccordement (3) qui peut être reliée à une valve d'un pneu de véhicule automobile, et en ce qu'un capteur magnétorésistant (9) coopérant avec un terminal (12) est associé au dynamomètre (D).

2. Dispositif de mesure de pression selon la revendication 1, caractérisé en ce que le bord périphérique ($4_4$) de la membrane (4) est réalisé sous forme de lèvre d'étanchéité en forme de bourrelet.

3. Dispositif de mesure selon la revendication 1, caractérisé en ce que dans la partie inférieure (1) du dynamomètre (D) est prévu un siège sensiblement adapté à la forme de la membrane (4) sur lequel repose librement la membrane (4).

4. Dispositif de mesure de pression selon les revendications 1 et 3, caractérisé en ce qu'il est prévu, comme siège pour la membrane (4) dans la partie inférieure (1) du dynamomètre (D), un évidement cylindrique (5) pour recevoir l'appendice cylindrique (4₂) et en ce qu'une surface de siège (5₁) sur laquelle repose librement la partie de membrane (4₁) en cône plat, mène en cône plat depuis le bord libre de l'évidement (5) vers la haut vers l'épaulement (5₂) de la partie inférieure (1).

5. Dispositif de mesure de pression selon la revendication 1, caractérisé en ce que la zone de bord du couvercle (2) est réalisée sous forme d'anneau plat (2₂) qui repose sur l'épaulement (5₂) de la partie inférieure (1) et sur le bord périphérique (4₄) de la membrane (4) qui constitue la lèvre d'étanchéité, et en ce qu'une partie de couvercle (2₃) étirée en cône plat vers le haut, qui présente un orifice central qui débouche dans un passage (8) du piquage de raccordement (3), sort du bord intérieur de l'anneau plat (2₂).

6. Un dispositif de mesure de pression selon les revendications 1 et 5, caractérisé en ce que le couvercle (2) présente un anneau cylindrique (2₁) comportant un filetage intérieur et entourant la partie inférieure (1) du dynamomètre (D), en et ce que l'anneau plat (2₂) est orienté radialement vers l'intérieur à partir du bord périphérique de l'anneau cylindrique (2₁) opposé au bord libre.

7. Dispositif de mesure selon la revendication 1, caractérise en ce qu'un amplificateur (10) et un transducteur (11) tensionfréquence sont associés au capteur magnétorésistant (9).

**Claims**

1. Manometer device for the continuous monitoring of the air pressure in vehicle tyres in which a membrane and a magnet movable with this is placed in a manometer capsule, consisting of a lower part with a cover tightly fixable thereon, which responds to changes in the tyre pressure and transmits these to a terminal, characterised in that the membrane (4) consists of a membrane part (4₃) running flat conically inwardly from a circular circumferential edge (4₄), which has a central opening (6) and on this is cylindrically outwardly extended and attached to the bottom (4₂) of the cylindrical part (4₁), the membrane is placed stretched over the inner chamber of the monometer capsule (D) and sits with its circumferential edge (4₄) on a radially inwardly directed shoulder (5₂) on the free edge of the lower part (1) of the manometer capsule (D) and is here tightly held by the cover (2), a permanent magnet (7) is placed in the cylindrical part (4₁) of the membrane (4) and the cover (2) has a pipe connector (3) connectable with a valve of a vehicle tyre and that with the monometer capsule (D) is associated a magneto-resistive sensor (9) co-operating with a terminal (12).

2. Manometer device according to claim 1, characterised in that the circumferential edge (4₄) of the membrane (4) is constructed as a bead-like sealing lip.

3. Manometer device according to claim 1 characterised in that in the lower part (1) of the manometer capsule (D) is provided a seating loosely lying on the membrane (4), substantially adapted to the shape of the membrane (4).

4. Manometer device according to claim 1 and 3, characterised in that, as seating for the membrane (4) in the lower part (1) of the manometer capsule (D), there is provided a cylindrical recess (5) for the reception of the cylindrical part (4₁) and from the free edge of the recess (5), leads to a flat conical seating surface (5₁), running upwardly to the shoulder (5₂) of the lower part (1), on which the flat conical membrane (4₁) lies loosely.

5. Manometer device according to claim 1 characterised in that the edge region of the cover (2) is formed as a flat ring (2₂) which sits on the shoulder (5₂) of the lower part (1) and on the circumferential edge (4₄) of the membrane (4) forming the sealing lip and, from the inner edge of the flat ring (2₂), a flat conical upwardly extended cover part (2₃) starts which has a central opening which opens into a passage (8) of the pipe connector (3).

6. Manometer device according to claim 1 and 5, characterised in that the cover (2) has a cylindrical ring (2₁) provided with inner thread engaging the lower part (1) of the manometer capsule (D) and the flat ring (2₂) is directed inwardly at a right-angle from the circumferential edge of the cylindrical ring (2₁) lying opposite the free edge.

7. Manometer device according to claim 1, characterised in that an amplifier (10), as well as a voltage frequency transformer (11), are associated with the magneto-resistive sensor (9).

EP 0 177 788 B1

Fig.1

# F i g.2

# F i g.3